# EUROPÄISCHE PATENTSCHRIFT

(11) **EP 4 277 064 B1**
(45) Veröffentlichungstag und Bekanntmachung des Hinweises auf die Patenterteilung: **05.06.2024**
(21) Anmeldenummer: 23170551.8
(22) Anmeldetag: 28.04.2023
(51) Int. Cl.: H02G 5/00, H02G 5/06, H02B 13/045, F16L 51/02

(54) **KAPSELUNGSGEHÄUSEANORDNUNG**
ENCAPSULATING HOUSING ASSEMBLY
ENSEMBLE RÉSERVOIR D'ENCAPSULAGE

(30) Priorität: 11.05.2022 DE 102022204594
(43) Veröffentlichungstag der Anmeldung: 15.11.2023
(73) Patentinhaber: Siemens Energy Global GmbH & Co. KG, 81739 München (DE)
(72) Erfinder: Beutel, Stefan, 10555 Berlin (DE)

(56) Entgegenhaltungen:
- DE-A1-102007 038 934
- DE-A1-102013 202 333
- GB-A- 1 404 931
- JP-U- S57 127 514

## Beschreibung

Die Erfindung betrifft eine Kapselungsgehäuseanordnung und eine gasisolierte Schaltanlage mit einer derartigen Kapselungsgehäuseanordnung.

Eine gasisolierte Schaltanlage weist ein mit einem Isoliergas gefülltes Kapselungsgehäuse und mehrere Schaltfelder auf, die durch eine Sammelschiene oder mehrere Sammelschienen verbunden sind. Temperaturschwankungen, beispielsweise Erwärmungen durch in den Sammelschienen fließende elektrische Ströme, bewirken Wärmedehnungen des Kapselungsgehäuses, die wiederum zu Spannungen in dem Kapselungsgehäuse führen, die das Kapselungsgehäuse verformen und beschädigen können.

WO 2009/147120 A1 offenbart eine Anordnung mit einem Kapselungsgehäuse, die zwei relativ zueinander linear bewegbare Rohrabschnitte aufweist. Die Rohrabschnitte begrenzen teilweise ein variables Kapselungsvolumen. Ein Kanal verbindet das Kapselungsvolumen mit einem umgekehrt proportional zu einer Volumenänderung des Kapselungsvolumens veränderbaren Kompensationsvolumen. Durch ihre Bewegbarkeit wirken die Rohrabschnitte als Dehnungsausgleichselemente, die Spannungen in dem Kapselungsgehäuse reduzieren. Durch die Relativbewegungen der Rohrabschnitte ändert sich jedoch das Kapselungsvolumen. Durch das Kompensationsvolumen, das umgekehrt proportional zu der Volumenänderung des Kapselungsvolumens veränderlich ist, kann der Druck im Innern des Kapselungsgehäuses trotz der Änderung des Kapselungsvolumens annähernd konstant gehalten werden. Allerdings erfordert die relative Bewegbarkeit der Rohrabschnitte entsprechende Dichtungen zwischen den Rohrabschnitten.

Weitere Beispiele für Kapselungsgehäuse mit mehreren Kompensationsfaltenbälgen in Fluidverbindung miteinander sind in DE102007038934 A1, DE102013202333 A1, GB1404931 A und JPS57127514U offenbart.

Der Erfindung liegt die Aufgabe zugrunde, eine Kapselungsgehäuseanordnung, insbesondere für eine gasisolierte Schaltanlage, mit zwei relativ zueinander bewegbaren Rohrabschnitten anzugeben, die insbesondere hinsichtlich der Dichtungen zwischen den Rohrabschnitten verbessert ist.

Die Aufgabe wird erfindungsgemäß durch eine Kapselungsgehäuseanordnung mit den Merkmalen des Anspruchs 1

Vorteilhafte Ausgestaltungen der Erfindung sind Gegenstand der Unteransprüche.

Eine erfindungsgemäße Kapselungsgehäuseanordnung umfasst
- einen ersten Rohrabschnitt mit einem ersten Rohrabschnittsendbereich,
- einen zweiten Rohrabschnitt mit einem zweiten Rohrabschnittsendbereich, der dem ersten Rohrabschnittsendbereich zugewandt ist,
- ein die beiden Rohrabschnittsendbereiche verbindendes Verbindungsteil, das fest mit dem ersten Rohrabschnitt verbunden ist und an dem der zweite Rohrabschnitt derart gelagert ist, dass er relativ zu dem ersten Rohrabschnitt parallel zu einer Längsachse des zweiten Rohrabschnitts verschiebbar und gegenüber dem ersten Rohrabschnitt verkippbar ist,
- eine um den ersten Rohrabschnittsendbereich herum angeordnete Lochscheibe, die fest mit dem zweiten Rohrabschnitt verbunden ist,
- einen ringartig um den ersten Rohrabschnittsendbereich herum zwischen dem Verbindungsteil und der Lochscheibe angeordneten ersten Faltenbalg und
- einen ringartig um den ersten Faltenbalg herum zwischen dem Verbindungsteil und der Lochscheibe angeordneten zweiten Faltenbalg, wobei
- der erste Faltenbalg, der zweite Faltenbalg, die Lochscheibe und der Verbindungsteil ein Ausgleichsvolumen umschließen, das durch wenigstens einen in dem Verbindungsteil verlaufenden Verbindungskanal mit einem von den Rohrabschnitten und dem Verbindungsteil umgebenen Rohrvolumen verbunden ist.

Eine erfindungsgemäße Kapselungsgehäuseanordnung ermöglicht eine Reduktion von Spannungen in einem Kapselungsgehäuse durch die beiden relativ zueinander bewegbaren Rohrabschnitte. Im Unterschied zu dem aus WO 2009/147120 A1 bekannten Stand der Technik sind die beiden Rohrabschnitte jedoch nicht nur linear relativ zueinander bewegbar, sondern auch gegeneinander verkippbar. Dadurch wird eine höhere Flexibilität der Verbindung der Rohrabschnitte erreicht.

Ein Ausgleichsvolumen wird durch zwei Faltenbälge gebildet, die zwischen dem Verbindungsteil und der Lochscheibe angeordnet sind. Da die Lochscheibe um den ersten Rohrabschnitt herum angeordnet und fest mit dem zweiten Rohrabschnitt verbunden ist, bewegen sich die Rohrscheibe und der Verbindungsteil aufeinander zu, wenn sich die Rohrabschnitte auseinander bewegen. Bei einer Vergrößerung des Rohrvolumens durch eine Relativbewegung der Rohrabschnitte verringert sich daher das Ausgleichsvolumen, so dass Gas, das aus dem Ausgleichsvolumen durch den wenigstens einen Verbindungskanal in das Rohrvolumen strömt, einem Druckabfall in dem Rohrvolumen entgegenwirkt. Die Dichtheit des Ausgleichsvolumens wird durch eine fluiddichte Verbindung der Enden der Rohrabschnitte mit dem Verbindungsteil und der Lochscheibe erreicht.

Bei einer Ausgestaltung der Erfindung sind die Querschnittsflächen des Rohrvolumens und des Ausgleichsvolumens in einer zu der Längsachse des zweiten Rohrabschnitts senkrechten Ebene wenigstens annähernd gleich groß. Dadurch wird vorteilhaft erreicht, dass sich bei einer Auseinanderbewegung der Rohrabschnitte das Ausgleichsvolumen im gleichen Maße verringert, wie sich das Rohrvolumen vergrößert, so dass der Druck in dem Rohrvolumen wenigstens annähernd konstant bleibt.

Bei einer weiteren Ausgestaltung der Erfindung sind der erste Faltenbalg und der zweite Faltenbalg jeweils aus einem metallischen Werkstoff gefertigt. Beispielsweise weisen dabei der erste Faltenbalg und der zweite Faltenbalg jeweils ein erstes Ende, das fluiddicht mit dem Verbindungsteil verschweißt ist, und ein zweites Ende, das fluiddicht mit der Lochscheibe verschweißt ist, auf. Die Fertigung der Faltenbälge aus einem metallischen Werkstoff erhöht vorteilhaft deren Stabilität gegenüber einer Fertigung beispielsweise aus einem Kunststoff und ermöglicht die fluiddichte Verschweißung ihrer Enden mit dem Verbindungsteil und der Lochscheibe.

Bei einer weiteren Ausgestaltung der Erfindung weist die Kapselungsgehäuseanordnung einen ringartig um den zweiten Rohrabschnittsendbereich herum angeordneten dritten Faltenbalg mit einem dem ersten Rohrabschnittsendbereich zugewandten ersten Ende, das fluiddicht mit dem Verbindungsteil verbunden ist, und einem von dem ersten Rohrabschnittsendbereich abgewandten zweiten Ende, das fluiddicht mit dem zweiten Rohrabschnitt verbunden ist, auf. Durch den dritten Faltenbalg wird der Verbindungsteil gegenüber dem zweiten Rohrabschnitt abgedichtet, so dass keine weitere Dichtung zwischen dem Verbindungsteil und dem zweiten Rohrabschnitt benötigt wird. Die Flexibilität des dritten Faltenbalgs ermöglicht dabei sowohl lineare Bewegungen als auch Verkippungen des zweiten Rohrabschnitts gegenüber dem ersten Rohrabschnitt und dem Verbindungsteil.

Bei einer weiteren Ausgestaltung der Erfindung weist der zweite Rohrabschnitt einen ringförmig nach außen abstehenden Befestigungskragen auf, an dem das zweite Ende des dritten Faltenbalgs befestigt ist.

Bei einer weiteren Ausgestaltung der Erfindung ist die Lochscheibe mit dem zweiten Rohrabschnitt durch mehrere Verbindungselemente verbunden, die sich jeweils von der Lochscheibe zu dem Befestigungskragen erstrecken und fest mit der Lochscheibe und dem Befestigungskragen verbunden sind.

Der Befestigungskragen des zweiten Rohrabschnitts dient somit gleichzeitig zum Befestigen des dritten Faltenbalgs an dem zweiten Rohrabschnitt als auch zum starren Koppeln der Lochscheibe an den zweiten Rohrabschnitt über die Verbindungselemente.

Bei einer weiteren Ausgestaltung der Erfindung ist der dritte Faltenbalg aus einem metallischen Werkstoff gefertigt. Die Fertigung des dritten Faltenbalgs aus einem metallischen Werkstoff erhöht vorteilhaft dessen Stabilität gegenüber einer Fertigung beispielsweise aus einem Kunststoff und ermöglicht eine fluiddichte Verschweißung der Enden des dritten Faltenbalgs mit dem Verbindungsteil und/oder dem zweiten Rohrabschnitt.

Bei einer weiteren Ausgestaltung der Erfindung ist der zweite Rohrabschnitt an dem Verbindungsteil durch einen Gleitring gelagert, der ringförmig um den zweiten Rohrabschnittsendbereich angeordnet ist. Beispielsweise weist der Verbindungsteil einen zu dem zweiten Rohrabschnitt abstehenden Umschlie-ßungskragen auf, der einen Endbereich des zweiten Rohrabschnittsendbereichs umgibt, und der Umschließungskragen oder der Endbereich des zweiten Rohrabschnittsendbereichs weist eine Nut auf, in die der Gleitring eingesetzt ist. Der Gleitring ermöglicht die relative Bewegung des zweiten Rohrabschnitts gegenüber dem ersten Rohrabschnitt und dem Verbindungsteil einschließlich der Verkippung des zweiten Rohrabschnitts gegenüber dem ersten Rohrabschnitt.

Bei einer weiteren Ausgestaltung der Erfindung weist ein von dem zweiten Rohrabschnitt abgewandtes Ende des ersten Rohrabschnitts einen ersten Flansch auf und/oder ein von dem ersten Rohrabschnitt abgewandtes Ende des zweiten Rohrabschnitts weist einen zweiten Flansch auf. Durch die Ausbildung der Enden der Rohrabschnitte als Flansche kann die Kapselungsgehäuseanordnung vorteilhaft in einfacher Weise mit anderen Baugruppen verbunden werden.

Eine erfindungsgemäße gasisolierte Schaltanlage weist eine erfindungsgemäß ausgebildete Kapselungsgehäuseanordnung auf, durch die zwei Baugruppen der Schaltanlage miteinander verbunden sind. Die Vorteile einer derartigen Schaltanlage ergeben sich aus den oben genannten Vorteilen einer erfindungsgemäßen Kapselungsgehäuseanordnung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine erste Schnittdarstellung eines Ausführungsbeispiels einer Kapselungsgehäuseanordnung,
FIG 2 eine Seitenansicht der in Figur 1 gezeigten Kapselungsgehäuseanordnung,
FIG 3 eine zweite Schnittdarstellung der in Figur 1 gezeigten Kapselungsgehäuseanordnung,
FIG 4 ein Ausführungsbeispiel einer gasisolierten Schaltanlage.

Einander entsprechende Teile sind in den Figuren mit denselben Bezugszeichen versehen.

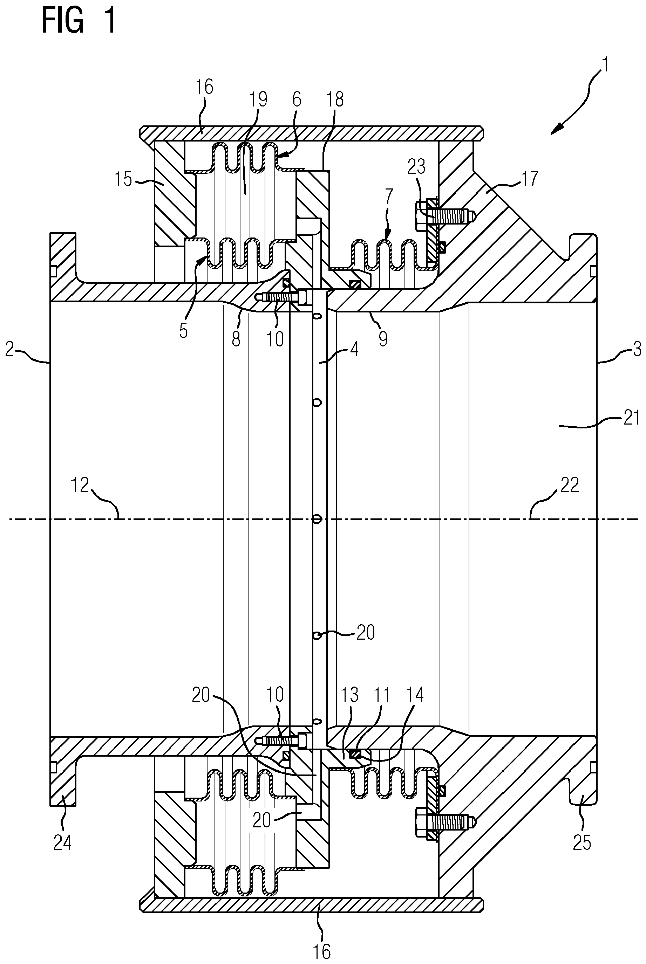

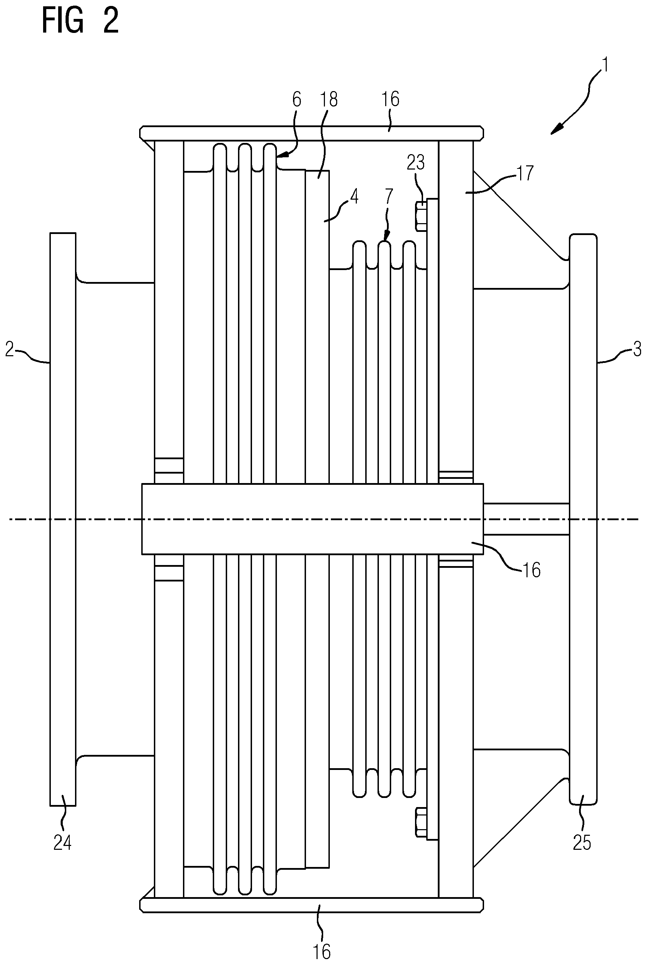

Figur 1 (FIG 1) und Figur 2 (FIG 2) zeigen ein Ausführungsbeispiel einer Kapselungsgehäuseanordnung 1. Dabei zeigt Figur 1 eine Schnittdarstellung der Kapselungsgehäuseanordnung 1 und Figur 2 zeigt eine Seitenansicht der Kapselungsgehäuseanordnung 1.

Die Kapselungsgehäuseanordnung 1 umfasst einen ersten Rohrabschnitt 2, einen zweiten Rohrabschnitt 3, ein Verbindungsteil 4 und drei Faltenbälge 5, 6, 7.

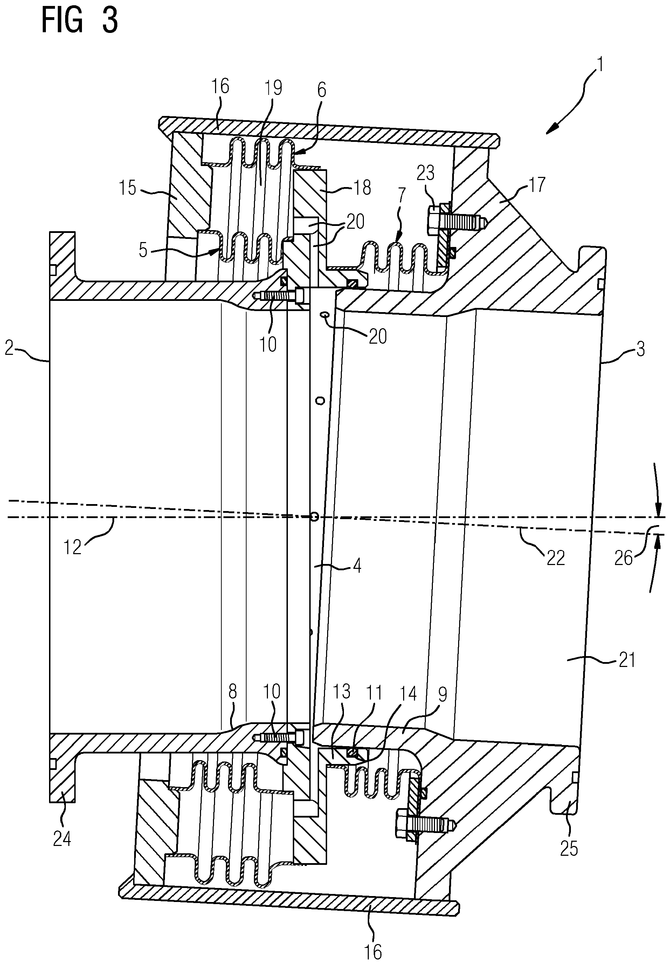

Der Verbindungsteil 4 verbindet einen ersten Rohrabschnittsendbereich 8 des ersten Rohrabschnitts 2 und einen dem ersten Rohrabschnittsendbereich 8 zugewandten zweiten Rohrabschnittsendbereich 9 des zweiten Rohrabschnitts 3. Der erste Rohrabschnitt 2 ist durch Schraubverbindungen 10 fest mit dem Verbindungsteil 4 verbunden. Der zweite Rohrabschnitt 3 ist durch einen Gleitring 11 an dem Verbindungsteil 4 gelagert, so dass der zweite Rohrabschnitt 3 relativ zu dem ersten Rohrabschnitt 2 parallel zu einer Längsachse 22 des zweiten Rohrabschnitts 2 verschiebbar und gegenüber dem ersten Rohrabschnitt 2 verkippbar ist (siehe Figur 3). Der Verbindungsteil 4 weist einen zu dem zweiten Rohrabschnitt 3 abstehenden Umschließungskragen 13 auf, der einen Endbereich des zweiten Rohrabschnittsendbereichs 9 umgibt. Eine dem zweiten Rohrabschnittsendbereich 2 zugewandte Oberfläche des Umschließungskragens 13 weist eine ringartig um den zweiten Rohrabschnittsendbereich 9 verlaufende Nut 14 auf, in die der Gleitring 11 eingesetzt ist, so dass der Gleitring 11 ringförmig um den zweiten Rohrabschnittsendbereich 9 angeordnet ist. Alternativ kann die Nut 14, in die der Gleitring 11 eingesetzt ist, ringartig in einer dem Umschließungskragen 13 zugewandten Außenoberfläche des Endbereichs des zweiten Rohrabschnittsendbereichs 9 verlaufen.

Die Kapselungsgehäuseanordnung 1 weist ferner eine um den ersten Rohrabschnittsendbereich 8 herum angeordnete Lochscheibe 15 auf. Die Lochscheibe 15 ist durch mehrere stangenartige Verbindungselemente 16 fest mit einem ringförmig nach außen abstehenden Befestigungskragen 17 des zweiten Rohrabschnitts 3 verbunden.

Der Verbindungsteil 4 ist ringförmig ausgebildet und weist einen größeren Außendurchmesser als die Rohrabschnitte 2, 3 auf, so dass ein Randbereich 18 des Verbindungsteils 4 nach außen von den Rohrabschnitten 2, 3 absteht.

Ein erster Faltenbalg 5 ist ringartig um den ersten Rohrabschnittsendbereich 8 herum zwischen dem Randbereich 18 des Verbindungsteils 4 und der Lochscheibe 15 angeordnet. Ein erstes Ende des ersten Faltenbalgs 5 ist fluiddicht mit dem Randbereich 18 des Verbindungsteils 4 verbunden. Ein zweites Ende des ersten Faltenbalgs 5 ist fluiddicht mit der Lochscheibe 15 verbunden. Beispielsweise ist der erste Faltenbalg 5 aus einem metallischen Werkstoff gefertigt und das erste Ende des ersten Faltenbalgs 5 ist mit dem Randbereich 18 des Verbindungsteils 4 verschweißt und das zweite Ende des ersten Faltenbalgs 5 ist mit der Lochscheibe 15 verschweißt.

Ein zweiter Faltenbalg 6 ist ringartig um den ersten Faltenbalg 5 herum zwischen dem Randbereich 18 des Verbindungsteils 4 und der Lochscheibe 15 angeordnet. Ein erstes Ende des zweiten Faltenbalgs 6 ist fluiddicht mit dem Randbereich 18 des Verbindungsteils 4 verbunden. Ein zweites Ende des zweiten Faltenbalgs 6 ist fluiddicht mit der Lochscheibe 15 verbunden. Beispielsweise ist der zweite Faltenbalg 6 aus einem metallischen Werkstoff gefertigt und das erste Ende des zweiten Faltenbalgs 6 ist mit dem Randbereich 18 des Verbindungsteils 4 verschweißt und das zweite Ende des zweiten Faltenbalgs 6 ist mit der Lochscheibe 15 verschweißt.

Der erste Faltenbalg 5, der zweite Faltenbalg 6, die Lochscheibe 15 und der Randbereich 18 des Verbindungsteils 4 umschließen ein Ausgleichsvolumen 19, das durch einen in dem Verbindungsteil 4 verlaufenden Verbindungskanal 20 mit einem von den Rohrabschnitten 2, 3 und dem Verbindungsteil 4 umgebenen Rohrvolumen 21 verbunden ist. Die Querschnittsflächen des Rohrvolumens 21 und des Ausgleichsvolumens 19 in einer zu einer Längsachse 22 des zweiten Rohrabschnitts 3 senkrechten Ebene sind dabei wenigstens annähernd gleich groß.

Wenn sich die Rohrabschnitte 2, 3 auseinander bewegen, bewegen sich die Rohrscheibe 15 und das Verbindungsteil 4 entsprechend aufeinander zu. Dadurch vergrößert sich das Rohrvolumen 21, während sich das Ausgleichsvolumen 19 in demselben Maß verringert. Durch die Verbindung des Ausgleichsvolumens 19 mit dem Rohrvolumen 21 über den Verbindungskanal 20 kann die Änderung des Ausgleichsvolumens 19 eine Änderung des Rohrvolumens 21 bei einer Relativbewegung der Rohrabschnitte 2, 3 somit ausgleichen, so dass der Druck in dem Rohrvolumen 21 wenigstens annähernd konstant bleibt.

Ein dritter Faltenbalg 7 ist ringartig um den zweiten Rohrabschnittsendbereich 9 herum angeordnet. Ein dem ersten Rohrabschnittsendbereich 8 zugewandtes erstes Ende des dritten Faltenbalgs 7 ist fluiddicht mit dem Verbindungsteil 4 verbunden und ein von dem ersten Rohrabschnittsendbereich 8 abgewandtes zweites Ende des dritten Faltenbalgs 7 ist fluiddicht mit dem Befestigungskragen 17 des zweiten Rohrabschnitts 3 verbunden. Beispielsweise ist der dritte Faltenbalg 7 aus einem metallischen Werkstoff gefertigt und das erste Ende des dritten Faltenbalgs 7 ist mit dem Verbindungsteil 4 verschweißt und das zweite Ende des dritten Faltenbalgs 7 ist mit dem Befestigungskragen 17 des zweiten Rohrabschnitts 3 durch Schraubverbindungen 23 verbunden und/oder verschweißt.

Ein von dem zweiten Rohrabschnitt 3 abgewandtes Ende des ersten Rohrabschnitts 2 weist einen ersten Flansch 24 auf. Ein von dem ersten Rohrabschnitt 2 abgewandtes Ende des zweiten Rohrabschnitts 3 weist einen zweiten Flansch 25 auf.

Figur 3 (FIG 3) zeigt eine zweite Schnittdarstellung der in den Figuren 1 und 2 gezeigten Kapselungsgehäuseanordnung 1, wobei die Längsachse 22 des zweiten Rohrabschnitts 3 gegenüber einer Längsachse 12 des ersten Rohrabschnitts 2 um einen Winkel 26 verkippt ist.

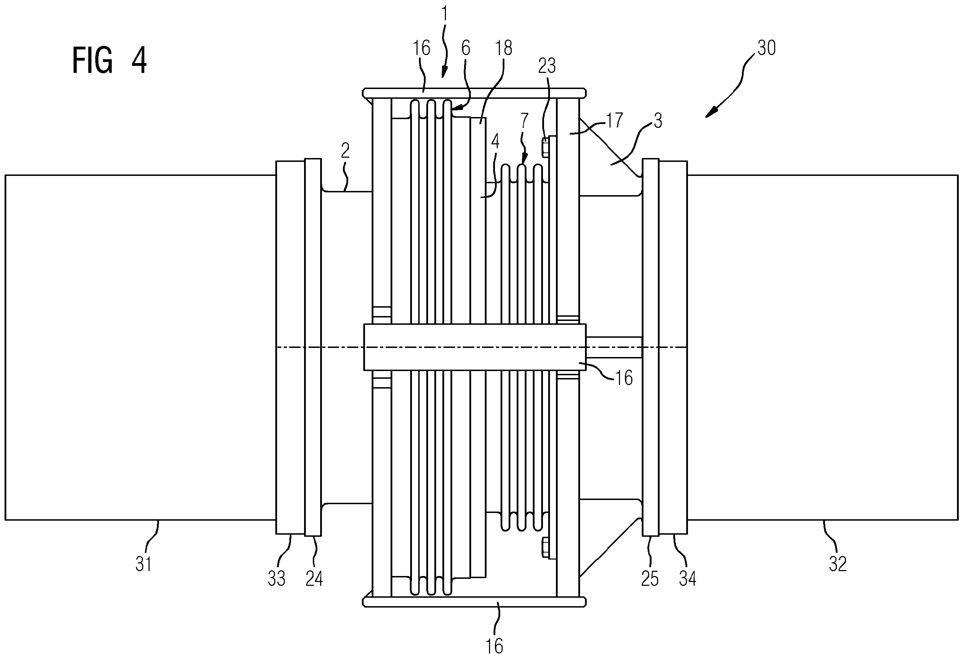

Figur 4 (FIG 4) zeigt schematisch ein Ausführungsbeispiel einer gasisolierten Schaltanlage 30. Die Schaltanlage 30 weist eine in den Figuren 1 bis 3 gezeigte Kapselungsgehäuseanordnung 1 auf, durch die zwei Baugruppen 31, 32 der Schaltanlage 30 miteinander verbunden sind. Eine erste Baugruppe 31 weist einen Flansch 33 auf, der mit dem ersten Flansch 24 der Kapselungsgehäuseanordnung 1 fluiddicht verbunden ist. Eine zweite Baugruppe 32 weist einen Flansch 34 auf, der mit dem zweiten Flansch 25 der Kapselungsgehäuseanordnung 1 fluiddicht verbunden ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, soweit sie in den Schutzumfang der Ansprüche fallen.

## Patentansprüche

1. Kapselungsgehäuseanordnung (1), umfassend
- einen ersten Rohrabschnitt (2) mit einem ersten Rohrabschnittsendbereich (8),
- einen zweiten Rohrabschnitt (3) mit einem zweiten Rohrabschnittsendbereich (9), der dem ersten Rohrabschnittsendbereich (8) zugewandt ist,
- ein die beiden Rohrabschnittsendbereiche (8, 9) verbindendes Verbindungsteil (4), das fest mit dem ersten Rohrabschnitt (2) verbunden ist und an dem der zweite Rohrabschnitt (3) derart gelagert ist, dass er relativ zu dem ersten Rohrabschnitt (2) parallel zu einer Längsachse (22) des zweiten Rohrabschnitts (3) verschiebbar und gegenüber dem ersten Rohrabschnitt (2) verkippbar ist,
- eine um den ersten Rohrabschnittsendbereich (8) herum angeordnete Lochscheibe (15), die fest mit dem zweiten Rohrabschnitt (3) verbunden ist,
- einen ringartig um den ersten Rohrabschnittsendbereich (8) herum zwischen dem Verbindungsteil (4) und der Lochscheibe (15) angeordneten ersten Faltenbalg (5) und
- einen ringartig um den ersten Faltenbalg (5) herum zwischen dem Verbindungsteil (4) und der Lochscheibe (15) angeordneten zweiten Faltenbalg (6), wobei
- der erste Faltenbalg (5), der zweite Faltenbalg (6), die Lochscheibe (15) und der Verbindungsteil (4) ein Ausgleichsvolumen (19) umschließen, das durch wenigstens einen in dem Verbindungsteil (4) verlaufenden Verbindungskanal (20) mit einem von den Rohrabschnitten (2, 3) und dem Verbindungsteil (4) umgebenen Rohrvolumen (21) verbunden ist.

2. Kapselungsgehäuseanordnung (1) nach Anspruch 1, wobei Querschnittsflächen des Rohrvolumens (21) und des Ausgleichsvolumens (19) in einer zu der Längsachse (22) des zweiten Rohrabschnitts (3) senkrechten Ebene wenigstens annähernd gleich groß sind.

3. Kapselungsgehäuseanordnung (1) nach Anspruch 1 oder 2, wobei der erste Faltenbalg (5) und der zweite Faltenbalg (6) jeweils aus einem metallischen Werkstoff gefertigt sind.

4. Kapselungsgehäuseanordnung (1) nach Anspruch 3, wobei der erste Faltenbalg (5) und der zweite Faltenbalg (6) jeweils ein erstes Ende, das fluiddicht mit dem Verbindungsteil (4) verschweißt ist, und ein zweites Ende, das fluiddicht mit der Lochscheibe (15) verschweißt ist, aufweisen.

5. Kapselungsgehäuseanordnung (1) nach einem der vorhergehenden Ansprüche mit einem ringartig um den zweiten Rohrabschnittsendbereich (9) herum angeordneten dritten Faltenbalg (7) mit einem dem ersten Rohrabschnittsendbereich (8) zugewandten ersten Ende, das fluiddicht mit dem Verbindungsteil (4) verbunden ist, und einem von dem ersten Rohrabschnittsendbereich (8) abgewandten zweiten Ende, das fluiddicht mit dem zweiten Rohrabschnitt (3) verbunden ist.

6. Kapselungsgehäuseanordnung (1) nach Anspruch 5, wobei der zweite Rohrabschnitt (3) einen ringförmig nach außen abstehenden Befestigungskragen (17) aufweist, an dem das zweite Ende des dritten Faltenbalgs (7) befestigt ist.

7. Kapselungsgehäuseanordnung (1) nach Anspruch 6, wobei die Lochscheibe (15) mit dem zweiten Rohrabschnitt (3) durch mehrere Verbindungselemente (16) verbunden ist, die sich jeweils von der Lochscheibe (15) zu dem Befestigungskragen (17) erstrecken und fest mit der Lochscheibe (15) und dem Befestigungskragen (17) verbunden sind.

8. Kapselungsgehäuseanordnung (1) nach einem der Ansprüche 5 bis 7, wobei der dritte Faltenbalg (7) aus einem metallischen Werkstoff gefertigt ist.

9. Kapselungsgehäuseanordnung (1) nach einem der vorhergehenden Ansprüche, wobei der zweite Rohrabschnitt (3) an dem Verbindungsteil (4) durch einen Gleitring (11) gelagert ist, der ringförmig um den zweiten Rohrabschnittsendbereich (9) angeordnet ist.

10. Kapselungsgehäuseanordnung (1) nach Anspruch 9, wobei der Verbindungsteil (4) einen zu dem zweiten Rohrabschnitt (3) abstehenden Umschließungskragen (13) aufweist, der einen Endbereich des zweiten Rohrabschnittsendbereichs (9) umgibt, und wobei der Umschließungskragen (13) oder der Endbereich des zweiten Rohrabschnittsendbereichs (9) eine Nut (14) aufweist, in die der Gleitring (11) eingesetzt ist.

11. Kapselungsgehäuseanordnung (1) nach einem der vorhergehenden Ansprüche, wobei ein von dem zweiten Rohrabschnitt (3) abgewandtes Ende des ersten Rohrabschnitts (2) einen ersten Flansch (24) aufweist.

12. Kapselungsgehäuseanordnung (1) nach einem der vorhergehenden Ansprüche, wobei ein von dem ersten Rohrabschnitt (2) abgewandtes Ende des zweiten Rohrabschnitts (3) einen zweiten Flansch (25) aufweist.

13. Gasisolierte Schaltanlage (30) mit einer gemäß einem der vorhergehenden Ansprüche ausgebildeten Kapselungsgehäuseanordnung (1), durch die zwei Baugruppen (31, 32) der Schaltanlage (30) miteinander verbunden sind.

## Claims

1. Encapsulation-housing arrangement (1) comprising
- a first tube portion (2) with a first tube-portion end region (8),
- a second tube portion (3) with a second tube-portion end region (9), which is directed towards the first tube-portion end region (8),
- a connecting part (4) which connects the two tube-portion end regions (8, 9), which is connected fixedly to the first tube portion (2), and on which the second tube portion (3) is mounted in such a way that it is displaceable parallel to a longitudinal axis (22) of the second tube portion (3) relative to the first tube portion (2) and is tiltable in relation to the first tube portion (2),
- a perforated disc (15) which is arranged around the first tube-portion end region (8) and which is connected fixedly to the second tube portion (3),
- a first corrugated bellows (5) which is arranged in a ring-like manner around the first tube-portion end region (8) between the connecting part (4) and the perforated disc (15), and
- a second corrugated bellows (6) which is arranged in a ring-like manner around the first corrugated bellows (5) between the connecting part (4) and the perforated disc (15), wherein
- the first corrugated bellows (5), the second corrugated bellows (6), the perforated disc (15) and the connecting part (4) enclose a compensating volume (19), said compensating volume being connected by at least one connecting channel (20), which extends in the connecting part (4), to a tube volume (21), which is surrounded by the tube portions (2, 3) and the connecting part (4).

2. Encapsulation-housing arrangement (1) according to Claim 1, wherein cross-sectional areas of the tube volume (21) and of the compensation volume (19) in a plane which is perpendicular to the longitudinal axis (22) of the second tube portion (3) are at least approximately equal.

3. Encapsulation-housing arrangement (1) according to Claim 1 or 2, wherein the first corrugated bellows (5) and the second corrugated bellows (6) are each manufactured from a metallic material.

4. Encapsulation-housing arrangement (1) according to Claim 3, wherein the first corrugated bellows (5) and the second corrugated bellows (6) each have a first end, which is welded in a fluid-tight manner to the connecting part (4), and a second end, which is welded in a fluid-tight manner to the perforated disc (15).

5. Encapsulation-housing arrangement (1) according to one of the preceding claims, having a third corrugated bellows (7) which is arranged in a ring-like manner around the second tube-portion end region (9) and which has a first end, directed towards the first tube-portion end region (8) and connected in a fluid-tight manner to the connecting part (4), and which has a second end, directed away from the first tube-portion end region (8) and connected in a fluid-tight manner to the second tube portion (3) .

6. Encapsulation-housing arrangement (1) according to Claim 5, wherein the second tube portion (3) has a fastening collar (17) which projects outwards in a ring-shaped manner and to which the second end of the third corrugated bellows (7) is fastened.

7. Encapsulation-housing arrangement (1) according to Claim 6, wherein the perforated disc (15) is connected to the second tube portion (3) by multiple connecting elements (16) which each extend from the perforated disc (15) to the fastening collar (17) and are connected fixedly to the perforated disc (15) and to the fastening collar (17).

8. Encapsulation-housing arrangement (1) according to one of Claims 5 to 7, wherein the third corrugated bellows (7) is manufactured from a metallic material.

9. Encapsulation-housing arrangement (1) according to one of the preceding claims, wherein the second tube portion (3) is mounted on the connecting part (4) by way of a slide ring (11) which is arranged in a ring-shaped manner around the second tube-portion end region (9).

10. Encapsulation-housing arrangement (1) according to Claim 9, wherein the connecting part (4) has an enclosing collar (13) which projects to the second tube portion (3) and which surrounds an end region of the second tube-portion end region (9), and wherein the enclosing collar (13) or the end region of the second tube-portion end region (9) has a groove (14) into which the slide ring (11) is inserted.

11. Encapsulation-housing arrangement (1) according to one of the preceding claims, wherein an end of the first tube portion (2) that is directed away from the second tube portion (3) has a first flange (24).

12. Encapsulation-housing arrangement (1) according to one of the preceding claims, wherein an end of the second tube portion (3) that is directed away from the first tube portion (2) has a second flange (25).

13. Gas-insulated switchgear (30) having an encapsulation-housing arrangement (1) which is designed according to one of the preceding claims and by which two sub-assemblies (31, 32) of the switchgear (30) are connected to one another.

## Revendications

1. Agencement (1) d'enveloppe d'encapsulage, comprenant
- un premier tronçon (2) de tuyau ayant une première partie (8) de bout de tronçon de tuyau,
- un deuxième tronçon (3) de tuyau ayant une deuxième partie (9) de bout de tronçon de tuyau, qui est tournée vers la première partie (8) de bout de tronçon de tuyau,
- une partie (4) de liaison, qui relie les deux parties (8, 9) de bout de tronçon de tuyau, qui est reliée fixement au premier tronçon (2) de tuyau et sur laquelle le deuxième tronçon (3) de tuyau est monté, de manière à pouvoir se déplacer par rapport au premier tronçon (2) de tuyau parallèlement à un axe (22) longitudinal du deuxième tronçon (3) de tuyau et à pouvoir basculer par rapport au premier tronçon (2) de tuyau,
- un disque (15) perforé, qui est disposé tout autour de la première partie (8) de bout de tronçon de tuyau et qui est relié fixement au deuxième tronçon (3) de tuyau,
- un premier soufflet (5) à plis disposé annulairement tout autour de la première partie (8) de bout de tronçon de tuyau entre la partie (4) de liaison et le disque (15) perforé et
- un deuxième soufflet (6) à plis disposé annulairement tout autour du premier soufflet (5) à plis entre la partie (4) de liaison et le disque (15) perforé, dans lequel
- le premier soufflet (5) à plis, le deuxième soufflet (6) à plis, le disque (15) perforé et la partie (4) de liaison enferment un volume (19) de compensation, qui communique par au moins un conduit (20) de liaison s'étendant dans la partie (4) de liaison avec un volume (21) tubulaire entouré des tronçons (2, 3) de tuyau et de la partie (4) de liaison.

2. Agencement (1) d'enveloppe d'encapsulage suivant la revendication 1, dans lequel des surfaces de section transversale du volume (21) tubulaire et du volume (19) de compensation sont au moins à peu près égales dans un plan perpendiculaire à l'axe (22) longitudinal du deuxième tronçon (3) de tuyau.

3. Agencement (1) d'enveloppe d'encapsulage suivant la revendication 1 ou 2, dans lequel le premier soufflet (5) à plis et le deuxième soufflet (6) à plis sont fabriqués chacun en un matériau métallique.

4. Agencement (1) d'enveloppe d'encapsulage suivant la revendication 3, dans lequel le premier soufflet (5) à plis et le deuxième soufflet (6) à plis ont chacun une première extrémité, qui est soudée d'une manière étanche au fluide à la partie (4) de liaison, et une deuxième extrémité, qui est soudée d'une manière étanche au fluide au disque (15) perforé.

5. Agencement (1) d'enveloppe d'encapsulage suivant l'une des revendications précédentes, comprenant un troisième soufflet (7) à plis disposé annulairement tout autour de la deuxième partie (9) de bout de tronçon de tuyau et ayant une première extrémité, qui est tournée vers la première partie (8) de bout de tronçon de tuyau et qui est reliée d'une manière étanche au fluide à la partie (4) de liaison, et une deuxième extrémité, qui n'est pas tournée vers la première partie (8) de bout de tronçon de tuyau et qui est reliée d'une manière étanche au fluide au deuxième tronçon (3) de tuyau.

6. Agencement (1) d'enveloppe d'encapsulage suivant la revendication 5, dans lequel le deuxième tronçon (3) de tuyau a un collet (17) de fixation, qui est en saillie annulairement vers l'extérieur et auquel la deuxième extrémité du troisième soufflet (7) à plis est fixée.

7. Agencement (1) d'enveloppe d'encapsulage suivant la revendication 6, dans lequel le disque (15) perforé est relié au deuxième tronçon (3) de tuyau par plusieurs éléments (16) de liaison, qui s'étendent chacun du disque (15) perforé au collet (17) de fixation et qui sont reliés fixement au disque (15) perforé et au collet (17) de fixation.

8. Agencement (1) d'enveloppe d'encapsulage suivant l'une des revendications 5 à 7, dans lequel le troisième soufflet (7) à plis est fabriqué en un matériau métallique.

9. Agencement (1) d'enveloppe d'encapsulage suivant l'une des revendications précédentes, dans lequel le deuxième tronçon (3) de tuyau est monté sur la partie (4) de liaison par une bague (11) de friction, qui est disposée annulairement autour de la deuxième partie (9) de bout de tronçon de tuyau.

10. Agencement (1) d'enveloppe d'encapsulage suivant la revendication 9, dans lequel la partie (4) de liaison a un collet (13) de confinement, qui est en saillie vers le deuxième tronçon (3) de tuyau et qui entoure une partie d'extrémité de la deuxième partie (9) de bout de tronçon de tuyau, et dans lequel le collet (13) de confinement où la partie d'extrémité de la deuxième partie (9) de bout de tronçon de tuyau a une rainure (14), dans laquelle la bague (11) de friction est insérée.

11. Agencement (1) d'enveloppe d'encapsulage suivant l'une des revendications précédentes, dans lequel une extrémité, non tournée vers le deuxième tronçon (3) de tuyau, du premier tronçon (2) de tuyau, a une première bride (24).

12. Agencement (1) d'enveloppe d'encapsulage suivant l'une des revendications précédentes, dans lequel une extrémité, non tournée vers le premier tronçon (2) de tuyau, du deuxième tronçon (3) de tuyau, a une deuxième bride (25).

13. Installation (30) de commutation isolée par du gaz, comprenant un agencement (1) d'enveloppe d'encapsulage, qui est constitué suivant l'une des revendications précédentes et par laquelle deux modules (31, 32) de l'installation (30) de commutation sont reliés entre eux.
